# EUROPÄISCHE PATENTSCHRIFT

(11) **EP 1 944 824 B1**
(45) Veröffentlichungstag und Bekanntmachung des Hinweises auf die Patenterteilung: **05.11.2014**
(21) Anmeldenummer: 07024485.0
(22) Anmeldetag: 18.12.2007
(51) Int. Cl.: H01M 10/60

(54) **Elektrischer Energiespeicher**
Electrical energy store
Dispositif de stockage d'énergie électrique

(30) Priorität: 10.01.2007 DE 102007001590
(43) Veröffentlichungstag der Anmeldung: 16.07.2008
(73) Patentinhaber: Behr GmbH & Co. KG, 70469 Stuttgart (DE)
(72) Erfinder: Damsohn, Herbert, 73773 Aichwald (DE); Heckenberger, Thomas, 70771 Leinfelden-Echterdingen (DE); Isermeyer, Tobias, 74245 Löwenstein (DE); Wolf, Walter, 71570 Oppenweiler-Zell (DE); Pfender, Conrad, 74354 Besigheim (DE)
(74) Vertreter: Grauel, Andreas

(56) Entgegenhaltungen:
- EP-A- 1 701 404
- WO-A-2004/086541
- DE-A1- 19 538 003

## Beschreibung

Die Erfindung betrifft einen elektrischen Energiespeicher nach dem Oberbegriff des Anspruchs 1.

Insbesondere aus dem Bau von Kraftfahrzeugen mit elektrischem Antrieb, zum Beispiel einem Hybrid-Antrieb, sind elektrische Energiequellen von hoher Leistungsdichte bekannt. Unter anderem handelt es sich dabei um Lithium-lonen-Batterien. Es ist zudem allgemein bekannt, solche Hochleistungsbatterien mit Luft z. B. aus einem klimatisierten Passagierbereich oder unit-telbar von einer Klimaanlage zu beströmen und so zu kühlen. In diesem Zusammenhang ist es bekannt, die Energiespeichereinheiten als Stapel von Flachzellen auszubilden, wobei innerhalb des Stapels zumindest einige plattenförmige Wärmeableitbleche zwischen benachbarten Flachzellen angebracht sind. Auch bei Verwendung solcher Wärmeableitbleche ist die Kühlung der Flachzellen in dem Stapel häufig sehr inhomogen, wobei die auftretenden Spitzentemperaturen letztlich die Grenze der Belastbarkeit der Energiespeichereinheit definieren.

Die EP 1 701 404 A1 offenbart ein Batteriemodul, bei welchem Zellbarrieren zwischen Batteriemodulen angeordnet sind.

Die WO 2004/086541 A offenbart eine Batterie mit elektrochemischen Zellen.

Es ist die Aufgabe der Erfindung, einen elektrischen Energiespeicher anzugeben, bei dem mit einfachen Mitteln eine verbesserte Homogenisierung der Temperatur, insbesondere unter hoher elektrischer Last, erreicht wird.

Diese Aufgabe wird für einen eingangs genannten elektrischen Energiespeicher erfingdungsgemäß mit den kennzeichnenden Merkmalen des Anspruchs 1 gelöst.

Durch die Mehrzahl von luftdurchströmbaren Kanälen im Bereich der Kühlplatten ist die Wärmeabfuhr unmittelbar von den flachen Seiten der Flachzellen und/oder von der gesamten Oberfläche der Kühlplatten erheblich verbessert. Insbesondere ist dabei die Gleichverteilung der Kühlleistung über die flachen Seiten der Flachzellen verbessert, was zu einer Homogenisierung der Temperatur in dem Energiespeicher führt.

In einer bevorzugten Ausführungsform ist die Kühlplatte als Blechformteil mit einer Mehrzahl von Rippen ausgebildet. Solche Blechformteile sind kostengünstig herstellbar und weisen ein günstiges Verhältnis zwischen Gewicht und zur Wärmeabfuhr geeigneter Oberfläche auf. In einer ersten bevorzugten Weiterbildung können die Rippen als über die Länge der Kühlplatte durchlaufende Wellrippen ausgebildet sein. Alternativ oder ergänzend können die Rippen auch in einer anderen Ausführung auch als Stegrippen mit zueinander versetzten, stegartigen Abschnitten ausgebildet sein. Solche Stegrippenbleche sind z. B. als Turbulenzeinlagen aus dem Bau von Wärmetauschern bekannt.

In einer vorteilhaften Ausführungsform sind zwischen zwei benachbarten der Flachzellen zwei aufeinander angeordnete Blechformteile angeordnet, wobei jedes der beiden Blechformteile mit jeweils einer der Flachzellen verbunden ist. Hierdurch lässt sich jede der einzelnen Flachzellen auf einfache Weise als Modul mit daran angeordneten Kühlplatten vorfertigen, wobei der elektrische Energiespeicher durch Stapelung und Kontaktierung der einzelnen Flachzellen mit ihren daran angeordneten Blechformteilen herstellbar ist. In einer alternativen bevorzugten Ausführungsform ist zwischen benachbarten Flachzellen nur ein einzelnes Blechformteil angeordnet sein, welches mit jeder der beiden benachbarten Flachzellen auf thermisch leitfähige Weise verbunden ist. Hierdurch kann Gewicht und Blechmaterial eingespart werden.

Zur Optimierung der Wärmeabfuhr von den Oberflächen der flachen Seiten der Flachzellen weisen die Rippen jeweils einen flächigen Kontaktbereich auf, wobei der Kontaktbereich durchgängig spaltfrei an der flachen Seite einer Flachzelle anliegt. Hierdurch ist die ableitbare Wärmeleistung gegenüber einer nicht spaltfreien Anlage erheblich verbessert.

Zur einfachen Erlangung einer spaltfreien Anlage weist der Kontaktbereich vorteilhaft eine konvexe Querschnittsform mit insbesondere im wesentlichen konstantem Krümmungsradius auf.

In einer vorteilhaften Weiterbildung ist zwischen dem Kontaktbereich und der flachen Seite ein stoffschlüssiges Mittel zur Verfüllung eines Spaltes angeordnet. Dabei kann es sich z. B. um einen Klebstoff, eine thermisch leitfähige Paste, einer dauerelastischen Masse mit guten thermischen Leitfähigkeiten oder Ähnliches handeln.

In einer alternativen oder ergänzenden Ausführung wird die Spaltfreiheit dadurch erreicht, dass die flache Seite der Flachzelle elastisch verformbar ist, wobei der Kontaktbereich mittels einer Andruckkraft spaltfrei an der flachen Seite anliegt. Durch die mechanische Vorspannung ist die Spaltfreiheit bzw. der gute Wärmekontakt zwischen Kühlplatte und Flachzelle auch dann gewährleistet, wenn sich durch Änderung der Betriebstemperatur Ausdehnungen oder Kontraktionen des Stapels ergeben.

In einer weiteren alternativen oder ergänzenden Ausführung kann die spaltfreie Anlage dadurch erreicht werden, dass die flache Seite eine dauerhafte Verformung zur spaltfreien Anlage des Kontaktbereichs aufweist. Eine solche Verformung kann zum Beispiel erlangt werden, indem eine thermoplastische Beschichtung der flachen Seite im Zuge einer Montage des Stapels durch Erhitzung erweicht wird, wobei der Kontaktbereich plastisch deformierend in die Beschichtung eingedrückt wird. Je nach Kontrolle der Verfahrensparameter im Zuge der Herstellung können die dabei auftretenden Temperaturen lokal durchaus oberhalb von kritischen Temperaturen für den Betrieb der Flachzellen liegen, solange sichergestellt wird, dass der Energiespeicher nicht insgesamt auf solche Temperaturen erhitzt wird.

Allgemein vorteilhaft sind die Flachzellen des elektrischen Energiespeichers jeweils als Lithium-Ionen-Batterien ausgebildet. Lithium-Ionen-Batterien weisen eine hohe Energiedichte sowohl bezüglich des Bauraums als auch bezüglich des Gewichts auf und sind insbesondere für den Betrieb von Kraftfahrzeugen mittels elektrischer Energie besonders gut geeignet. Allerdings sind Lithium-Ionen-Batterien auch hinsichtlich der Betriebstemperaturen empfindlich, was bei entsprechender Missachtung sowohl reversible nachteilige Effekte als auch irreversible zerstörende Effekte durch zu hohe Temperaturen nach sich zieht. Typisch sollte die Betriebstemperatur der Batterien zwischen 5 °C und 48 °C liegen, wobei Temperaturunterschiede innerhalb des Energiespeichers nicht größer als 3 °C sein sollten. Oberhalb von 55 °C können in solchen Batteriezellen chemische Reaktionen erfolgen, die die Zelle dauerhaft schädigen. Die verbesserte, insbesondere homogenere Kühlung durch die erfindungsgemäßen Merkmale ist besonders in Verbindung mit Lithium-Ionen-Batterien vorteilhaft.

Im Interesse eines einfachen Aufbaus des Energiespeichers weisen die Flachzellen elektrische Kontaktbereiche auf, die jeweils im Bereich von Stirnseiten der Flachzellen angeordnet sind. Hierdurch können die insbesondere aus Metall bestehenden Kühlplatten die seitlichen Flächen der Flachzellen besonders vollständig überdecken und somit bis in die Randbereiche eine homogene Kühlung bereitstellen. Die Flachzellen können mittels ihrer Kontaktbereiche vorteilhaft seriell miteinander verschaltet sein, wodurch hohe totale Potenzialdifferenzen zur einfachen Entnahme einer hohen Leistung erreicht werden. Dies macht eine entsprechende elektrische Isolation erforderlich. Die Kontaktelemente können insbesondere abstehende Kontakte oder auch freibleibende leitende Stellen sein.

Erfindungsgemäß sind die stapelartig angeordneten Flachzellen in einem Randbereich mittels einer Vergussmasse stoffschlüssig miteinander verbunden. Hierdurch ist eine einfache Montage gegeben, wobei das Vergießen insbesondere vorteilhaft unter einer mechanischen Vorspannung zwischen den einzelnen Flachzellen und den Kühlplatten vorgenommen wird.

Erfindungsgemäß ist durch die Vergussmasse eine Führung für den Luftstrom ausgebildet. Hierdurch lässt sich der Luftstrom auf einfache Weise durch die Kanäle der Kohlplatten leiten, wobei ein einfacher Anschluss an weitere Luftleitmittel wie etwa Luftkanäle ermöglicht ist.

Die flächigen Seiten der Flachzellen weisen allgemein bevorzugt eine elektrisch isolierende Beschichtung auf, so dass die bevorzugt aus Metall bestehenden Kühlplatten lediglich mit der isolierenden Beschichtung in Berührung sind und somit keinen ohmschen Kontakt mit den elektrisch aktiven Bereichen der Flachzellen aufweisen. Im Interesse einer guten Wärmeabfuhr besteht diese isolierende Beschichtung aus einem Kunststoff mit hoher Wärmeleitfähigkeit. Hierzu kann dem Material der isolierenden Beschichtung ein geeigneter Zuschlagstoff wie etwa Keramikpulver beigemengt sein.

In einer alternativen oder ergänzenden Ausführungsform weisen zumindest einige der Flachzellen formschlüssige Mittel auf, wobei benachbarte Flachzellen des Stapels durch die formschlüssigen Mittel in zumindest einer Raumrichtung zueinander zwangsgeführt sind. Hierdurch kann eine vereinfachte Montage des Stapels erfolgen, zum Beispiel indem die Flachzellen aufeinander gesetzt und der fertige Stapel mechanisch verklammert wird.

In bevorzugter Weiterbildung sind dabei die formschlüssigen Mittel als Rastmittel ausgebildet sind, wobei insbesondere benachbarte Flachzellen miteinander verrastbar sind. Dies ermöglicht eine noch einfachere und sicherere Montage, wobei eine elektrische Verbindung benachbarter Zellen mechanisch durch die Verrastung gesichert werden kann.

Auf einfache Weise können die formschlüssigen Mittel aus einer Vergussmasse ausgebildet sein, zum Beispiel einem thermoplastischen oder duroplastischen Kunststoff. Bevorzugt sind die formschlüssigen Mittel in einem seitlichen Randbereich der Flachzellen angeordnet und bilden insbesondere eine seitliche Führung für den Luftstrom aus.

Weitere Vorteile und Merkmale der Erfindung ergeben sich aus den nachfolgend beschriebenen Ausführungsbeispielen sowie aus den abhängigen Ansprüchen.

Nachfolgend werden mehrere bevorzugte Ausführungsbeispiele eines erfindungsgemäßen elektrischen Energiespeichers beschrieben und anhand der anliegenden Zeichnungen näher erläutert.
- Fig. 1: zeigt eine schematische Schnittansicht eines ersten Ausführungsbeispiels eines elektrischen Energiespeichers.
- Fig. 2: zeigt eine schematische Darstellung einer einzelnen Flachzelleneinheit eines zweiten Ausführungsbeispiels der Erfindung.
- Fig. 3: zeigt eine schematische Darstellung eines aus Flachzellen gemäß Fig. 2 aufgebauten elektrischen Energiespeichers.
- Fig. 4: zeigt eine Abwandlung des Energiespeichers aus Fig. 3.
- Fig. 5: zeigt eine weitere Abwandlung des Energiespeichers aus Fig. 3.
- Fig. 6: zeigt eine schematische Darstellung eines Details eines bevorzugten Energiespeichers.
- Fig. 7: zeigt eine Detaildarstellung eines weiteren Ausführungsbeispiels der Erfindung.
- Fig. 8: zeigt eine Detaildarstellung eines weiteren Ausführungsbeispiels der Erfindung.
- Fig. 9: zeigt eine Abwandlung des Ausführungsbeispiels aus Fig. 8.
- Fig. 10: zeigt eine Detaildarstellung eines weiteren Ausführungsbeispiels der Erfindung.
- Fig. 11: zeigt eine räumliche schematische Darstellung eines weiteren Ausführungsbeispiels der Erfindung.
- Fig. 12: zeigt eine Abwandlung des Ausführungsbeispiels aus Fig. 11.
- Fig. 13: zeigt eine weitere Abwandlung des Ausführungsbeispiels aus Fig. 11.

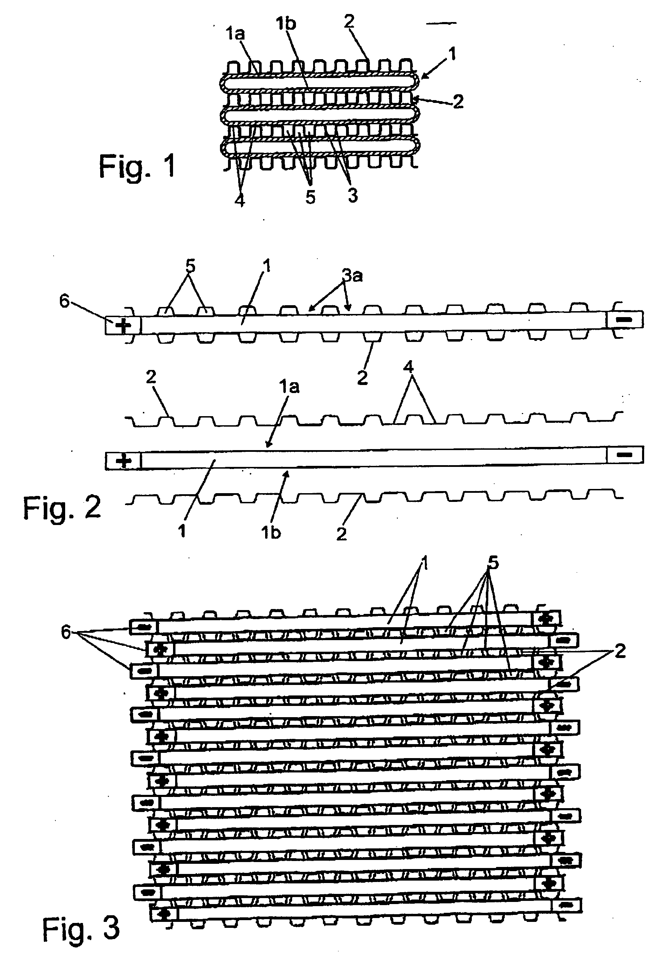

in einem ersten Ausführungsbeispiel nach Fig. 1 umfasst ein erfindungsgemäßer elektrischer Energiespeicher mehrere als Flachzellen 1 ausgebildete Lithium-Ionen-Batterien, die sich im wesentlichen in einer Ebene erstrecken und in dieser Ebene eine erste flache Seite 1a und eine zweite flache Seite 1b haben. Solche Bauformen von Lithium-Ionen-Batterien sind unter anderem unter dem Trivialnamen "Coffee-Bags" bekannt. Unter einer Flachzelle im Sinne der Erfindung kann auch ein Stapel aus an sich selbstständigen Batterien verstanden werden, so dass zum Beispiel die abgebildeten Flachzellen jeweils ein Gebinde aus drei Akkumulatoren von je 1,2 V Grundspannung sind, die bereits seriell zu einer Flachzellenspannung von 3,6 V seriell verschaltet sind.

Die Flachzellen 1 sind parallel zueinander stapelartig angeordnet, wobei zwischen jeweils zwei benachbarten Flachzellen 1 eine Kühlplatte 2 angeordnet ist. Die Kühlplatte 2 ist als Blechformteil aus einem gut wärmeleitenden Metall, z. B. Kupfer oder Aluminium, ausgeformt. Die Kühlplatten 2 sind als Wellrippen-Blechformteile ausgebildet und umfassen jeweils eine Mehrzahl von Rippen 3. Die Rippen 3 haben im Wesentlichen senkrecht zu der Ebene der flachen Seiten 1 a, 1b ausgerichtete Wandabschnitte und umfassen zudem Kontaktbereiche 4, die als im Wesentlichen parallel zu den flachen Seiten 1 a, 1 b verlaufende Abschnitte des Blechformteils ausgeformt sind.

Durch die Wandabschnitte der Rippen 3 und die flachen Seiten 1 a, 1b der Flachzellen 1 werden eine Anzahl von in einer Längsrichtung durchgängigen Kanälen 5 ausgebildet. Diese Kanäle 5 sind zur Durchströmung mit Luft geeignet, um in den Flachzellen entstehende Wärme möglichst gleichmäßig abzuführen. Die Luftströmung verläuft bezüglich der Darstellung Fig. 1 im Wesentlichen senkrecht zur Zeichnungsebene.

Grundsätzlich kann ein erfindungsgemäßer Energiespeicher mehrere Stapel aus Flachzellen umfassen, wobei die Stapel je nach Bauraum und Luftströnung zueinander angeordnet sein können. Ein typischer Energiespeicher umfasst etwa vierzig Flachzellen. Diese können in einem einzigen Stapel angeordnet sein oder zum Beispiel in vier Stapeln zu je zehn Zellen.

In dem ersten Ausführungsbeispiel gemäß Fig. 1 ist zwischen zwei benachbarten Flachzellen 1 jeweils genau ein Blechformteil 2 angeordnet. Eine andere Möglichkeit der Ausbildung luftdurchströmbarer Kühlplatten zwischen benachbarten Flachzellen 1 einer elektrischen Energiespeichereinheit ist in Fig. 2 und Fig. 3 dargestellt. Dabei wird eine Flachzelle 1 im Zuge einer Vorfertigung zunächst auf jeder ihrer flachen Seiten 1a, 1 b mit einem wellrippenartigen Blechformteil 2 versehen. Die untere Darstellung zeigt die beiden Blechformteile 2 und die Flachzelle 1 in separierter Darstellung, wobei die obere Darstellung nach Fig. 2 die vormontierte Einheit aus Flachzelle 1 und Blechformteilen 2 zeigt.

Die so vorgefertigten Einheiten werden zur Ausbildung eines elektrischen Energiespeichers aufeinander gestapelt. Wie in Fig. 3 erkennbar ist, greifen dabei die stegartigen Vorsprünge jeweils eines Blechformteils 2 in jeweils korrespondierende Ausbuchtungen 3a des an einer benachbarten Flachzelle festgelegten Blechformteils ein.

Die Flachzellen 1 haben in stirnseitigen Endbereichen Kontaktfahnen, die im vorliegenden Fall für den positiven und den negativen Pol an entgegengesetzten Stirnseiten der Flachzellen 1 angeordnet sind. Diese Kontaktfahnen 6 werden bezüglich benachbarter Flachzellen 1 so miteinander verbunden, dass die Flachzellen 1 in dem Stapel seriell verschaltet sind. Zur Vereinfachung dieser Kontaktierung sind die Ausrichtungen der Kontaktfahnen in dem Stapel gemäß Fig. 3 alternierend, so dass auf einer Seite jeweils ein negativer Batteriepol neben einem positiven Batteriepol der angrenzenden Flachzelle angeordnet ist und umgekehrt.

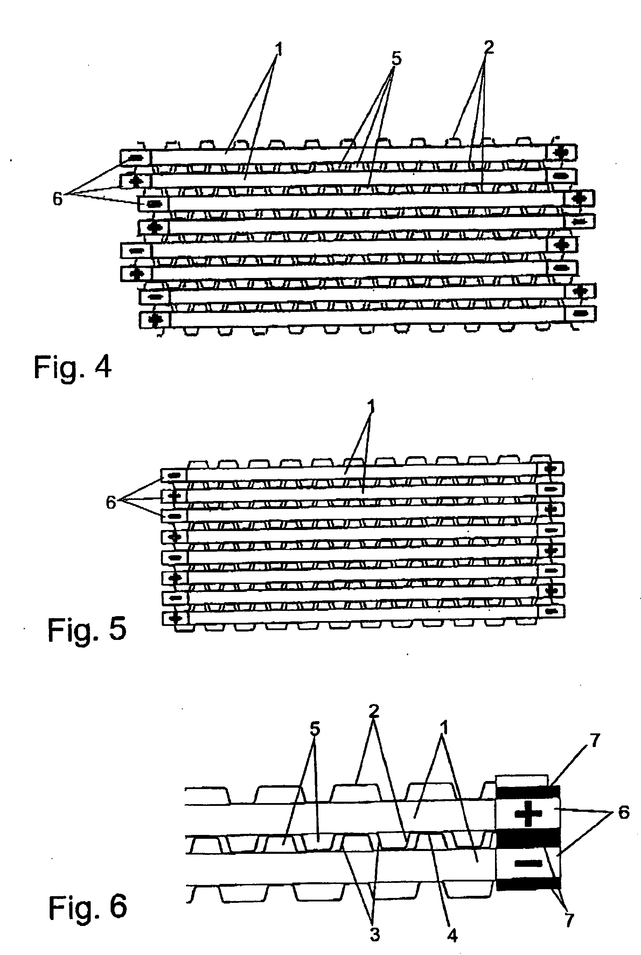

Fig. 4 zeigt eine Abwandlung der Ausführung aus Fig. 2 und Fig. 3, bei der die Kühlplatten bzw. Blechformteile 2 bezüglich der beiden flachen Seiten 1 a, 1 b nicht auf gleicher Höhe, sondern versetzt zueinander auf den Flachzellen 1 festgelegt sind. Hierdurch lässt sich eine fluchtende Ausrichtung der Kontaktfahnen bzw. seitlichen Enden jeweils zweier benachbarter Flachzellen 1 erreichen (siehe Fig. 4).

Bei einer wiederum anderen Positionierung und Dimensionierung der Rippen 3 der Blechformteile 2 lässt sich auch eine fluchtende Ausrichtung der Endabschnitte bzw. Kontaktfahnen 6 sämtlicher der Flachzellen 1 eines Stapels erreichen, siehe Fig. 5. Allgemein kann es vorgesehen sein, dass die Blechformteile 2 der beiden Seiten 1 a, 1 b der gleichen Flachzelle 1 jeweils unterschiedlich ausgeformt sind, insbesondere bezüglich der Breite der Stege 3 und des Verhältnisses der Stegbreite zu der benachbarten Ausnehmung 3a.

Allgemein kann, wie z. B. in Fig. 3 bis Fig. 5 gezeigt, auf den endseitigen Flachzellen 1 des Stapels eine abschließende Kühlplatte 7 vorgesehen sein.

Fig. 6 zeigt einen Ausschnitt aus einem Randbereich eines Stapels aus Flachzellen 1. Dabei sind die Randbereiche und die elektrisch miteinander kontaktierten Kontaktfahnen 6 über eine Vergussmasse 7 stoffschlüssig miteinander verbunden. Bei der Vergussmasse 7 handelt es sich um ein geeignetes Polymer. Durch das Vergießen der Randbereiche wird zugleich eine seitliche Wand des Stapels aus Flachzellen 1 gebildet, so dass der den Stapel durchströmende Luftstrom durch die Wand aus Vergussmasse geleitet wird. Zugleich bietet die Vergussmasse 7 einen zuverlässigen Schutz vor elektrischen Kurzschlüssen.

Eine besonderes Detail der vorliegenden Erfindung betrifft die Optimierung des Wärmeübergangs zwischen den Kontaktbereichen 4 der Blechformteile 2 und den flachen Seiten 1 a, 1b der Flachzellen. In bevorzugter Weiterentwicklung der Erfindung verbleibt kein Luftspalt zwischen den Kontaktbereichen 4 und der jeweiligen flachen Seite 1 a, 1 b der Flachzelle 1, an der der Kontaktbereich 4 jeweils anliegt.

Im Bereich der Anlage der Kontaktbereiche 4 wird der Wärmeabtransport von den Flachzellen 1 weitgehend durch Wärmediffusion von der Flachzellenwand 1 a, 1b in das Material des Blechformteils 2 geleistet. In den Oberflächenbereichen der flachen Seiten 1a, 1b, an denen kein Kontaktbereich 4 der Blechformteile 2 anliegt, wird der Wärmeabtransport dagegen hauptsächlich durch die an der Oberfläche entlang strömende Kühlluft gewährleistet.

Verbleibt nun ein Luftspalt, der aufgrund seiner Enge wenig Luftströmung zulässt, zwischen dem Kontaktbereich 4 und der Flachzelle 1, so ist zumindest ein lokal schlechter Wärmetransport gegeben und die Flachzelle kann lokal überhitzen. Zur Vermeidung solcher Luftspalte stellt die Erfindung verschiedene Lösungen bereit:

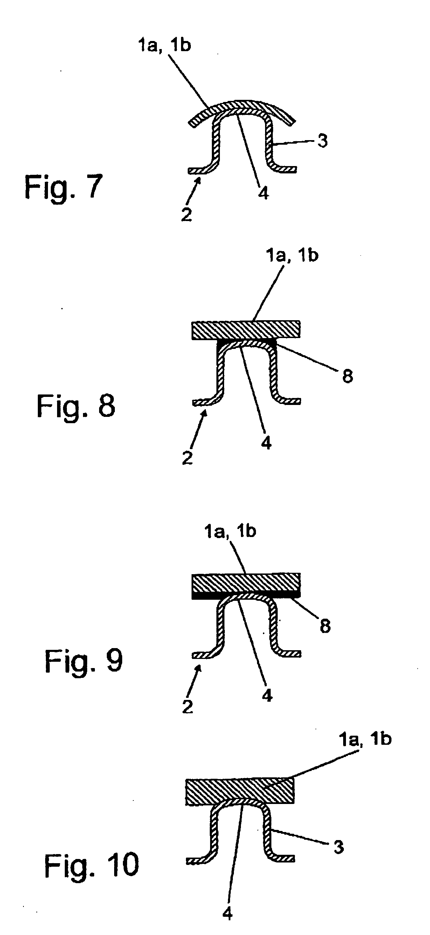

Fig. 7 zeigt eine Lösung, bei der die flachen Seiten 1a, 1 b der Flachzelle 1 weitgehend elastische Eigenschaften aufweisen. Der Kontaktbereich 4 des Blechformteils 2 wird durch eine mechanische Vorspannkraft, die im montierten Stapel dauerhaft vorliegt, gegen die Flachzelle 1 gedrückt, so dass sich die Oberfläche der jeweiligen flachen Seite 1 a, 1 b an den Kontaktbereich 4 spaltfrei anschmiegt. Dieses spaltfreie Anschmiegen ist zudem dadurch optimiert, dass der Kontaktbereich 4 eine im wesentliche konvexe Form aufweist, die vorliegend über ihren Verlauf einen im Wesentlichen konstanten Krümmungsradius aufweist.

Eine alternative Möglichkeit zur Optimierung der spaltfreien Anlage ist in Fig. 8 dargestellt. Ein stoffschlüssiges Mittel 8, z. B. ein Klebstoff oder eine wärmeleitfähige Paste, ist zwischen dem Kontaktbereich 4 und der Oberfläche der flachen Seite 1 a, 1b angeordnet. Hierdurch wird ein eventuell verbleibender Luftspalt verfüllt und eine ausreichende Wärmediffusion zwischen Flachzelle 1 und Blechformteil 2 ist gewährleistet.

Fig. 9 zeigt eine Abwandlung der Ausführung aus Fig. 8. Während in Fig. 8 das stoffschlüssige Mittel 8 lediglich über die Breite des Kontaktbereichs 4 auf der Oberfläche 1 a, 1 b der Flachzelle 1 angeordnet ist, erstreckt sich das stoffschlüssige Mittel 8 im Fall des Beispiels von Fig. 9 über die gesamte flache Seite 1 a, 1b. Im Fall von Fig. 8 werden im Zuge der Herstellung des Stapels die vorstehenden Kontaktbereiche 4 des Blechformteils 2 mit stoffschlüssigem Mittel 8 belegt und nachfolgend auf die Flachzelle 1 aufgesetzt. Im Fall der Ausführung aus Fig. 9 wird dagegen zunächst die flache Seite 1a, 1b der Flachzelle flächig mit stoffschlüssigem Mittel 8 belegt und nachfolgend wird das Blechformteil 2 mit seinen Kontaktbereichen 4 aufgesetzt.

Eine weitere Möglichkeit der Vermeidung eines Luftspalts zwischen Kontaktbereich 4 und Flachzelle 1 ist in Fig. 10 dargestellt. Hier ist die flache Seite 1 a der Flachzelle 1 plastisch, also weitgehend ohne elastische Vorspannung lokal in ihrer Form an den Kontaktbereich 4 angepasst. Dies kann zum Beispiel durch ein Erweichen der Oberfläche 1a, nachfolgendes Andrücken des Kontaktbereichs 4 und nachfolgendes Erstarren der Oberfläche 1a erzielt werden. Eine solche Lösung bietet sich an, wenn z. B. eine ausreichend dicke Kunststoffbeschichtung auf der Oberfläche 1a der Flachzelle 1 vorliegt. Bei einer solchen Anordnung ist hinsichtlich der Optimierung der Parameter während des Herstellungsprozesses darauf zu achten, dass keine Überhitzung der Lithium-Ionen-Batterien stattfindet. Dies kann z. B. dadurch erreicht werden, dass lediglich lokal im Bereich der Anlage des Kontaktbereichs 4 eine Erwärmung der Oberfläche 1a stattfindet, z. B. durch kontrolliertes Vorheizen der Blechformteile 2 und nachfolgendes Andrücken mit kontrollierter Kraft und Dauer.

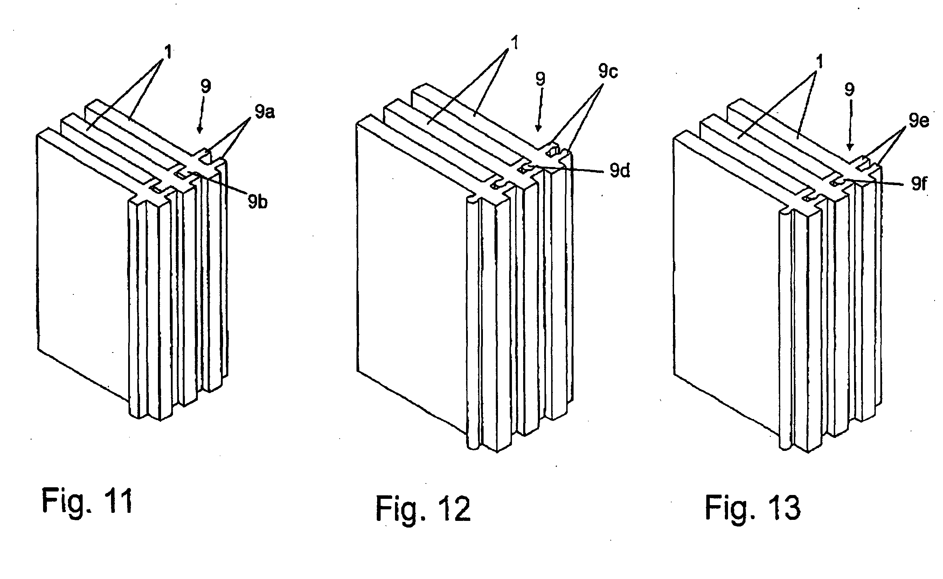

Eine alternative oder ergänzende Ausführungsform eines erfindungsgemäßen Stapels von Flachzellen 1 ist in Fig. 11 schematisch dargestellt. Dabei sind im Bereich der seitlichen Ränder der Flachzellen 1 längliche Ausformungen aufgebracht, die untereinander als formschlüssige Mittel 9 zusammenwirken. Auf der einen Seite einer Flachzelle 1 ist dabei jeweils eine erste Struktur 9a angeordnet und auf der gegenüberliegenden Seite eine hierzu formschlüssig entsprechende Struktur 9b. Die Strukturen 9a einer Flachzelle greifen dann im Stapel nach Art von Nut und Feder in die Strukturen 9b einer benachbarten Flachzelle 1 ein, so dass in zumindest einer Raumrichtung eine formschlüssige Halterung bzw. Positionierung der Flachzellen zueinander gegeben ist. Zugleich bilden die Strukturen 9a, 9b eine seitliche Strömungsbegrenzung für den Luftstrom aus, analog zu der seitlichen Vergussmasse 7 in Fig. 6.

Kühlplatten 2 mit Kanälen 5 sind wie in den vorhergehenden Beispielen zwischen den Flachzellen 1 angeordnet, in Fig. 11 bis Fig. 13 aber nicht dargestellt.

Fig. 12 zeigt eine Abwandlung des Beispiels aus Fig. 11, bei der die formschlüssigen Mittel 9 auf der einen Seite eine elastische Struktur 9c nach Art einer Rastnut und auf der anderen Seite eine Struktur 9d nach Art einer Rastfeder aufweisen. Die Rastfeder 9d hat eine im Querschnitt kreisförmige Verdickung, die in eine entsprechend invers geformte Ausnehmung der Rastnut 9c elastisch einrastet. Nach dem Verrasten sind die benachbarten Flachzellen nicht nur wie in Fig. 11 in einer Querrichtung formschlüssig aneinander gehalten, sondern auch in Stapelrichtung.

Fig. 13 zeigt eine Abwandlung des Beispiels aus Fig. 12, bei der die Verdickung der Feder im Querschnitt im Wesentlichen halbkreisförmig ist.

In den Ausführungsbeispielen nach Fig. 11 bis Fig. 13 bestehen die seitlichen formschlüssigen Mittel 9 aus einer auf die Flachzellen aufgebrachten Vergussmasse. Im Unterschied zu dem Ausführungsbeispiel nach Fig. 6 werden die einzelnen Flachzellen zunächst mit diesen Strukturen vorgefertigt und können dann auf einfache Weise zu einem Stapel aufgebaut werden.

## Patentansprüche

1. Elektrischer Energiespeicher, insbesondere für ein Kraftfahrzeug, umfassend eine Mehrzahl von Flachzellen (1), wobei jede der Flachzellen (1) eine erste flache Seite (1a) und eine hierzu im wesentlichen parallele zweite flache Seite (1 b) aufweist,
wobei die Mehrzahl der Flachzellen (1) unter im Wesentlichen paralleler Anordnung der flachen Seiten (1a, 1b) stapelartig übereinander angeordnet ist,
wobei zumindest eine Kühlplatte (2) zwischen zwei benachbarten Flachzellen (1) des Stapels angeordnet ist, wobei die Kühlplatte (2) eine Mehrzahl von mit Luft durchströmbaren Kanälen (5) zur Abführung von Wärme umfasst, **dadurch gekennzeichnet, dass** die stapelartig angeordneten Flachzellen (1) in einem Randbereich mittels einer Vergussmasse (7) stoffschlüssig miteinander verbunden sind, wobei durch die Vergussmasse (7) eine Führung für den Luftstrom ausgebildet ist.

2. Elektrischer Energiespeicher nach Anspruch 1, **dadurch gekennzeichnet, dass** die Kühlplatte als Blechformteil (2) mit einer Mehrzahl von Rippen (3) ausgebildet ist.

3. Elektrischer Energiespeicher nach Anspruch 2, **dadurch gekennzeichnet, dass** die Rippen (3) als über die Länge des Blechformteils (2) durchgängige Wellrippen ausgebildet sind.

4. Elektrischer Energiespeicher nach Anspruch 2, **dadurch gekennzeichnet, dass** die Rippen über die Länge der Kühlplatte als Stegrippen mit zueinander versetzten, stegartigen Abschnitten ausgebildet sind.

5. Elektrischer Energiespeicher nach einem der Ansprüche 2 bis 4, **dadurch gekennzeichnet, dass** zwischen zwei benachbarten Flachzellen (1) zwei aufeinander angeordnete Blechformteile (2) angeordnet sind, wobei jedes der beiden Blechformteile (2) an jeweils einer der Flachzellen (1) anliegt.

6. Elektrischer Energiespeicher nach einem der Ansprüche 2 bis 4, **dadurch gekennzeichnet, dass** zwischen zwei benachbarten Flachzellen (1) genau ein Blechformteil (2) als Kühlplatte angeordnet ist.

7. Elektrischer Energiespeicher nach einem der Ansprüche 2 bis 6, **dadurch gekennzeichnet, dass** die Rippen (3) jeweils einen flächigen Kontaktbereich (4) aufweisen, wobei der Kontaktbereich (4) durchgängig spaltfrei an der flachen Seite (1 a, 1b) einer Flachzelle (1) anliegt.

8. Elektrischer Energiespeicher nach Anspruch 7, **dadurch gekennzeichnet, dass** der Kontaktbereich (4) eine konvexe Querschnittsform mit insbesondere im Wesentlichem konstantem Krümmungsradius aufweist.

9. Elektrischer Energiespeicher nach Anspruch 7 oder 8, **dadurch gekennzeichnet, dass** zwischen dem Kontaktbereich (4) und der flachen Seite (1 a, 1 b) ein stoffschlüssiges Mittel (8) zur Verfüllung eines Spaltes angeordnet ist.

10. Elektrischer Energiespeicher nach Anspruch 7 oder 8, **dadurch gekennzeichnet, dass** die flache Seite (1 a, 1 b) elastisch verformbar ist, wobei der Kontaktbereich (4) mittels einer Andruckkraft spaltfrei an der elastisch verformten flachen Seite anliegt.

11. Elektrischer Energiespeicher nach Anspruch 7 oder 8, **dadurch gekennzeichnet, dass** die flache Seite (1a, 1b) eine dauerhafte plastische Verformung zur spaltfreien Anlage des Kontaktbereichs (4) aufweist.

12. Elektrischer Energiespeicher nach einem der vorhergehenden Ansprüche, **dadurch gekennzeichnet, dass** die Flachzellen (1) jeweils als Lithium-Ionen-Batterie ausgebildet sind.

13. Elektrischer Energiespeicher nach einem der vorhergehenden Ansprüche, **dadurch gekennzeichnet, dass** die Flachzellen (1) elektrische Kontaktbereiche (6) aufweisen, die jeweils an schmalen Stirnseiten der Flachzellen (1) angeordnet sind.

14. Elektrischer Energiespeicher nach einem der vorhergehenden Ansprüche, **dadurch gekennzeichnet, dass** die Flachzellen (1) zumindest im Bereich der flachen Seiten (1a, 1b) eine elektrisch isolierende Beschichtung aufweisen.

15. Elektrischer Energiespeicher nach einem der vorhergehenden Ansprüche, **dadurch gekennzeichnet, dass** zumindest einige der Flachzellen (1) formschlüssige Mittel (9) aufweisen, wobei benachbarte Flachzellen (1) des Stapels durch die formschlüssigen Mittel (9) in zumindest einer Raumrichtung zueinander zwangsgeführt sind.

16. Elektrischer Energiespeicher nach Anspruch 15, **dadurch gekennzeichnet, dass** die formschlüssigen Mittel (9) als Rastmittel (9c, 9d, 9e, 9f) ausgebildet sind, wobei insbesondere benachbarte Flachzellen (1) miteinander verrastbar sind.

17. Elektrischer Energiespeicher nach einem der Ansprüche 15 oder 16, **dadurch gekennzeichnet, dass** die formschlüssigen Mittel (9) aus einer Vergussmasse ausgebildet sind.

18. Elektrischer Energiespeicher nach einem der Ansprüche 15 bis 17, **dadurch gekennzeichnet, dass** die formschlüssigen Mittel (9) in einem seitlichen Randbereich der Flachzellen (1) angeordnet sind und insbesondere eine seitliche Führung für den Luftstrom ausbilden.

## Claims

1. An electrical energy store, in particular for a motor vehicle, comprising a plurality of flat cells (1), wherein each of the flat cells (1) has a first flat side (1a) and a second flat side (1b) substantially parallel hereto, wherein the plurality of flat cells (1) is arranged above one another in a stack-like manner with substantially parallel arrangement of the flat sides (1a, 1b), wherein at least one cooling plate (2) is arranged between two adjacent flat cells (1) of the stack, wherein the cooling plate (2) comprises a plurality of ducts (5) through which air can be passed in order to dissipate heat, **characterised in that** the flat cells (1) arranged in a stack-like manner are interconnected in an integrally bonded manner in an edge region by means of a casting compound (7), wherein a guide for the airflow is formed by the casting compound.

2. The electrical energy store according to claim 1, **characterised in that** the cooling plate is formed as a shaped sheet metal part (2) having a plurality of ribs (3).

3. The electrical energy store according to claim 2, **characterised in that** the ribs (3) are formed as continuous corrugated ribs over the length of the shaped sheet metal part (2).

4. The electrical energy store according to claim 2, **characterised in that** the ribs are formed over the length of the cooling plate as ribs having web-like potions offset from one another.

5. The electrical energy store according to one of claims 2 to 4, **characterised in that** two shaped sheet metal parts (2) facing one another are arranged between two adjacent flat cells (1), wherein each of the two shaped sheet metal parts (2) rests on a respective one of the flat cells (1).

6. The electrical energy store according to one of claims 2 to 4, **characterised in that** precisely one shaped sheet metal part (2) is arranged as a cooling plate between two adjacent flat cells (1).

7. The electrical energy store according to once of claims 2 to 6, **characterised in that** each rib (3) has a planar contact region (4), wherein the contact region (4) rests continuously and without gaps against the flat side (1a, 1b) of a flat cell (1).

8. The electrical energy store according to claim 7, **characterised in that** the contact region (4) has a convex cross-sectional shape with in particular substantially constant radius of curvature.

9. The electrical energy store according to claim 7 or 8, **characterised in that** an integrally bonded means (8) for filling a gap is arranged between the contact region (4) and the flat side (1a, 1b).

10. The electrical energy store according to claim 7 or 8, **characterised in that** the flat side (1a, 1b) is resiliently deformable, wherein the contact region (4) rests without gaps against the resiliently deformed flat side by means of a contact pressure.

11. The electrical energy store according to claim 7 or 8, **characterised in that** the flat side (1a, 1b) has a permanent plastic deformation so as to rest without gaps against the contact region (4).

12. The electrical energy store according to one of the preceding claims, **characterised in that** each flat cell (1) is formed as a lithium-ion battery.

13. The electrical energy store according to one of the preceding claims, **characterised in that** the flat cells (1) have electrical contact regions (6), each of which is arranged on narrow end faces of the flat cells (1).

14. The electrical energy store according to one of the preceding claims, **characterised in that** the flat cells (1) have an electrically insulating coating at least in the region of the flat sides (1a, 1b).

15. The electrical energy store according to one of the preceding claims, **characterised in that** at least some of the flat cells (1) have form-fitting means (9), wherein adjacent flat cells (1) of the stack are forcibly guided relative to one another in at least one spatial direction by the form-fitting means (9).

16. The electrical energy store according to claim 15, **characterised in that** the form-fitting means (9) are formed as detent means (9c, 9d, 9e, 9f), wherein in particular adjacent flat cells (1) can be latched to one another.

17. The electrical energy store according to one of claims 15 or 16, **characterised in that** the form-fitting means (9) are formed from a casting compound.

18. The electrical energy store according to one of claims 15 to 17, **characterised in that** the form-fitting means (9) are arranged in a lateral edge region of the flat cells (1) and in particular form a lateral guide for the airflow.

## Revendications

1. Accumulateur d'énergie électrique, en particulier pour un véhicule automobile, comprenant une pluralité d'éléments plats (1), où chacun des éléments plats (1) présente un premier côté plat (1a) et un second côté plat (1b) pratiquement parallèle à ce premier côté, où les éléments plats (1) constituant une pluralité d'éléments sont disposés les uns au-dessus des autres en formant une pile et un agencement pratiquement parallèle des côtés plats (1a, 1b), où au moins une plaque de refroidissement (2) est disposée entre deux éléments plats adjacents (1) de la pile, où la plaque de refroidissement (2) comprend une pluralité de conduits (5) traversés par de l'air et servant à la dissipation de chaleur, **caractérisé en ce que** les élément plats (1) disposés en formant une pile sont, dans une zone de bordure, assemblés les uns aux autres par continuité de matière, au moyen d'une masse de scellement (7), où un guindage pour le flux d'air est configuré à travers la masse de scellement (7).

2. Accumulateur d'énergie électrique selon la revendication 1, **caractérisé en ce que** la plaque de refroidissement est conçue comme une pièce de forme en tôle (2) comportant une pluralité d'ailettes (3).

3. Accumulateur d'énergie électrique selon la revendication 2, **caractérisé en ce que** les ailettes (3) sont configurées, sur la longueur de la pièce de forme en tôle (2), comme des ailettes ondulées continues.

4. Accumulateur d'énergie électrique selon la revendication 2, **caractérisé en ce que** les ailettes sont configurées, sur la longueur de la plaque de refroidissement, comme des ailettes en forme de barrettes ayant des parties, en forme de barrettes, décalées les unes par rapport aux autres.

5. Accumulateur d'énergie électrique selon l'une quelconque des revendications 2 à 4, **caractérisé en ce que** deux pièces de forme en tôle (2) disposées l'une sur l'autre sont disposées entre deux éléments plats adjacents (1), où chacune des deux pièces de forme en tôle (2) est en appui à chaque fois sur l'un des éléments plats (1).

6. Accumulateur d'énergie: électrique selon l'une quelconque des revendications 2 à 4, **caractérisé en ce qu'**une pièce de forme en tôle (2) servant de plaque de refroidissement est disposée précisément entre deux éléments plats adjacents (1).

7. Accumulateur d'énergie électrique selon l'une quelconque des revendications 2 à 6, **caractérisé en ce que** les ailettes (3) présentent à chaque fois une zone de contact (4) de surface, où la zone de contact (4) est en appui de façon continue, sans interstice, sur le côté plat (1a, 1b) d'un élément plat (1).

8. Accumulateur d'énergie électrique selon la revendication 7, **caractérisé en ce que** la zone de contact (4) présente une forme de section convexe ayant un rayon de courbure en particulier pratiquement constant.

9. Accumulateur d'énergie électrique selon la revendication 7 ou 8, **caractérisé en ce qu'**un moyen (8) obtenu par continuité de matière est disposé pour combler un interstice formé entre la zone de contact (4) et le côté plat (1a, 1b).

10. Accumulateur d'énergie électrique selon la revendication 7 ou 8, **caractérisé en ce que** le côté plant (1a, 1b) est déformable élastiquement, où la zone de contact (4) est en appui, sans interstice, sur le côté plat déformé élastiquement, au moyen d'une force d'application.

11. Accumulateur d'énergie électrique selon la revendication 7 ou 8, **caractérisé en ce que** le côté plat (1a, 1b) présente une déformation plastique permanente par rapport à l'appui, sans interstice, de la zone de contact (4).

12. Accumulateur d'énergie électrique selon l'une quelconque des revendications précédentes, **caractérisé en ce que** les éléments plats (1) sont configurés à chaque fois comme une batterie à ions de lithium.

13. Accumulateur d'énergie électrique selon l'une quelconque des revendications précédentes, **caractérisé en ce que** les éléments plats (1) présentent des zones de contact électrique (6) qui sont disposées à chaque fois sur des côtés fronteaux étroits des éléments plats (1).

14. Accumulateur d'énergie électrique selon l'une quelconque des revendications précédentes, **caractérisé en ce que** les éléments plats (1) présentent, au moins dans la zone des côtés plats (1a, 1b), un revêtement électroisolant.

15. Accumulateur d'énergie électrique selon l'une quelconque des revendications précédentes, **caractérisé en ce qu'**au moins certains des éléments plats (1) présentent des moyens (9) à adaptation de forme, où des éléments plats adjacents (1) de la pile sont insérés les uns dans les autres, de manière forcée et dans au moins une direction spatiale, par les moyens (9) à adaptation de forme.

16. Accumulateur d'énergie électrique selon la revendication 15, **caractérisé en ce que** les moyens (9) à adaptation de forme sont conçus comme des moyens d'emboîtement mâles/femelles (9c, 9d, 9e, 9f), où en particulier des éléments plats adjacents (1) peuvent être assemblés les uns aux autres par emboîtement.

17. Accumulateur d'énergie électrique selon l'une des revendications 15 ou 16, caractérisé en ces que les moyens (9) à adaptation de forme sont configurés à partir d'une masse de scellement.

18. Accumulateur d'énergie électrique selon l'une quelconque des revendications 15 à 17, **caractérisé en ce que** les moyens (9) à adaptation de forme sont disposés dans une zone de bordure latérale des éléments plats (1) et forment en particulier un guidage latéral pour le flux d'air.
